# EUROPEAN PATENT SPECIFICATION

(11) **EP 2 333 990 B1**
(45) Date of publication and mention of the grant of the patent: **06.11.2013**
(21) Application number: 09290929.0
(22) Date of filing: 10.12.2009
(51) Int. Cl.: H04B 10/2581, H04J 14/04

(54) **Stable optical MIMO transmission system over multimode fiber**
Stabiles optisches MIMO-Übertragungssystem über eine Mehrmodenfaser
Système de transmission MIMO optique stable sur une fibre multimodale

(43) Date of publication of application: 15.06.2011
(73) Proprietor: Alcatel Lucent, 75007 Paris (FR)
(72) Inventor: Buelow, Henning, 70806 Kernwestheim (DE)
(74) Representative: Wetzel, Emmanuelle

(56) References cited:
- WO-A2-96/17262
- US-A- 5 504 608
- TSEKREKOS C P ET AL: "Temporal Stability of a Transparent Mode Group Diversity Multiplexing Link" IEEE PHOTONICS TECHNOLOGY LETTERS, IEEE SERVICE CENTER, PISCATAWAY, NJ, US LNKD- DOI:10.1109/LPT.2006.886978, vol. 18, no. 23, 1 December 2006 (2006-12-01), pages 2484-2486, XP011150559 ISSN: 1041-1135
- TSEKREKOS C P ET AL: "Experimental study of the temporal behaviour of a mode group diversity multiplexing link" LASERS AND ELECTRO-OPTICS AND 2006 QUANTUM ELECTRONICS AND LASER SCIENCE CONFERENCE. CLEO/QELS 2006. CONFERENCE ON, IEEE, PISCATAWAY, NJ, USA, 21 May 2006 (2006-05-21), pages 1-2, XP031322660 ISBN: 978-1-55752-813-1

## Description

The present document relates to optical transmission systems. In particular, it relates to multiple input, multiple output (MlM0) transmission over optical multimode fibers (MMF).

Multi Gigabit/s optical transmissions systems have been proposed which increase the capacity, i.e. the bits per second, transported over an optical fiber within a given spectrum by moving from a single-mode fiber (SMF) to a multi-mode fiber (MMF) and by transporting different communication channels over the different spatial modes of the MMF. In a similar manner to MlM0 transmission in wireless or wireline systems, the originally transmitted communication channels of the optical transmission system can be separated from the mix of the signals detected by N coherent receivers by joint digital l signal processing (DSP) of the N received signals. The communication channels can be e.g. single-carrier channels or optical OFDM channels.

Moreover, the spot sizes of the MMF modes in a multi-mode fiber are typically larger than the spot size of the mode in a single-mode fiber. By consequence, the optical signal intensity across the profile of the MMF is lower than the optical signal intensity across the profile of an SMF. In view of the fact that many non-linear distortion effects of a fiber, e.g. self phase modulation (SPM) or cross phase modulation (XPM), increase with an increasing intensity across the profile of the fiber, the impact of non-linear distortion effects in MMF should be reduced compared to SMF. Hence, the associated lower optical non-linearity enables higher fiber launch powers at an optical transmitter before the non-linear signal degradation impacts the quality of the communication channel. As a consequence, a higher OSNR budget can be expected leading to longer link length (e.g. submarine link) or to higher spectral efficiency.

Tsekrekos C P et al, "Temporal Stability of a Transparent Mode Group Diversity Multiplexing Link", IEEE Photonics Technology Letters, IEEE Service Center, Piscataway, NJ, vol. 18, no. 23, 1.12.2006, pages 2484-2486, describes a method for measuring the transmission matrix of a mode group diversity multiplexing link.

The present document describes an optical transmission system which enables the transmission of an increased bitrate over the plurality of communication channels without statistical degradation of the bitrate. Due to the described realization of the optical transmission system, phase drifts which may reduce the efficiency of a transmission channel can be compensated by the DSP at the optical receiver.

According to an aspect a network arrangement configured to equalize a first and a second mode in a multi-mode fiber is described. The network arrangement may also be referred to as an optical network arrangement. The first and the second mode may be electro-magnetic propagation modes of the multi-mode fiber, e.g. linear polarization (LP) modes of the multi-mode fiber. It should be noted that a multi-mode fiber may comprise up to 50 and more modes. Nevertheless, for ease of illustration, the different aspects and features will be outlined for a first and a second mode of the multi-mode fiber. The terms "a first mode" and "a second mode" could be understood as "a least a first mode" and "at least a second mode".

The network arrangement may comprise a first power determination unit which is configured to determine first power values associated with the first and the second mode at a first network location, i.e. a separate power value associated with the first and the second mode is determined. For this purpose, the first and the second mode may be partially or completely extracted at the first network location. Subsequently, the power or a value indicative of the power of the partially or completely extracted modes may be determined. By way of example, the power values of the partially extracted modes may be determined by using one or more photo diodes, e.g. a photo diode for each mode.

The network arrangement may comprise a second power determination unit which is configured to determine second power values associated with the first and the second mode at a second network location downstream of the first network location. In an embodiment, the first and the second network location are the location of a transmitter and the location of a receiver, respectively. In a further embodiment, the first and the second location are positioned upstream and downstream, respectively, of a network component which modifies a power of the first and/or second mode. Such a network component may be e.g. a multi-mode fiber amplifier, an optical add-drop multiplexer, a reconfigurable optical add-drop multiplexer and/or an optical switch.

The network arrangement may comprise a first equalizer which is associated with the first mode and which is configured to change a power of the first mode at the second network location. The first equalizer may comprise a variable optical attenuator which is configured to attenuate the power of the first mode. The first equalizer may also comprise a variable optical amplifier which is configured to amplify the power of the first mode.

The network arrangement may comprise a power control unit which is configured to analyze the first and the second power values determined by the first and the second power determination unit, respectively; and/or to control the first equalizer. In particular, the analyzing may comprise the determination of a ratio of the first power values, as well as a ratio of the second power values. If the ratios differ, the power control unit may trigger the first equalizer to change the power of the first mode. In an embodiment the first equalizer is controlled such that a ratio of the changed power of the first mode at the second network location downstream of the first equalizer and a power of the second mode at the second network location corresponds to a ratio of the first power values. In other words, the power of the first mode at the second network location may be changed, i.e. amplified and/or attenuated, such that the ratio of the power values of the first and second mode determined at the first network location corresponds to the ratio of the powers of the first and second mode after equalization at the second network location. In particular, the ratio may be the power value associated with the first mode at the first network location divided by the power value associated with the second mode at the first network location; and/or the power of the first mode at the second network location downstream of the first equalizer divided by the power of the second mode at the second network location downstream of an optional second equalizer which is associated with the second mode and which is configured to change the power of the second mode at the second network location.

The network arrangement may comprise a first mode extraction unit which is configured to extract the first and the second mode from the multi-mode fiber at the first network location. The network arrangement may comprise a second mode extraction unit upstream of the first equalizer which is configured to extract the first and the second mode from the multi-mode fiber at the second network location. The network arrangement may comprise a first mode insertion unit downstream of the first mode extraction unit which is configured to insert the first mode in the multi-mode fiber at the first network location. The network arrangement may comprise a second mode insertion unit downstream of the first equalizer which is configured to insert the first mode in the multi-mode fiber at the second network location. The units may comprise at least one of: a long-period fiber grating; a hologram; a lens; and/or a single-mode fiber. Furthermore, the units may be configured to extract a mode independently from the other mode and/or insert a mode in the multi-mode fiber independently from the other mode.

The network arrangement may comprise one or more of the above mentioned network components at an intermediate network location downstream of the first network location and upstream of the second network location. In particular, the network component may comprise an amplifying multi-mode fiber, e.g. an erbium doped fiber amplifier. In such cases, the network arrangement may be configured to uniformly amplify the first and the second mode in the multi-mode fiber.

It should be noted that the multi-mode fiber may span different subsections of different types of multi-mode fibers. As such, the multi-mode fiber upstream of the first network location may be different from the multi-mode fiber downstream of the first network location. In a similar manner, the multi-mode fiber upstream of the second network location may be different from the multi-mode fiber downstream of the second network location.

According to a further aspect, an optical network is described. The optical network may comprise a multi-mode fiber configured to transmit a first and a second mode; and/or a multi-mode transmitter configured to transmit data over a first and a second communication channel using the first and the second mode, respectively; and/or a multi-mode receiver configured to receive the data of the first and the second communication channel; and/or a network arrangement comprising any of the aspects and/or features outlined in the present document. The network arrangement may be positioned downstream of the multi-mode transmitter and upstream of the multi-mode receiver.

The optical network may make use of MlM0 techniques in order to separate the data carried within the first and the second communication channel. In particular, the multi-mode receiver may comprise a plurality of optical coherent receivers which are configured to provide a plurality of digitized received signals. The multi-mode receiver may further comprise a multiple-input multiple-output processing unit which is configured to determine, e.g. separate, the data of the first and the second communication channel from the plurality of digitized received signals.

It should be noted that in general terms, M communication channels using M modes of the multi-mode fiber may be transmitted. These M communication channels may be received using N coherent receivers.

According to a further aspect, a method for equalizing a first and a second mode in a multi-mode fiber is described. The method may comprise the step of determining first power values associated with the first and the second mode at a first network location; and/or the step of determining second power values associated with the first and the second mode at a second network location downstream of the first network location; and/or the step of analyzing the first and second power values; and/or the step of changing a power of the first mode at the second network location subject to the analyzing of the first and second power values. The changing of the power of the first mode may be performed such that a ratio of the changed power of the first mode at the second network location and a power of the second mode at the second network location corresponds to a ratio of the first power values.

It should be noted that the above mentioned aspects may be combined with one another or extracted from one another in various ways. In particular, all possible claim and feature combinations are considered to be disclosed by the present document. Furthermore, the aspects and features outlined in relation with a system are equally applicable in relation to the corresponding method.

The objects and features of the invention will become apparent from the following description of examples. The present invention is described in the following by referring to exemplary embodiments illustrated schematically in the accompanying figures, wherein
Fig. 1 illustrates an exemplary optical MMF transmission system using multiple-input multiple output techniques;
Fig. 2a shows exemplary modes in a multi-mode fiber;
Fig. 2b shows an exemplary setup for the coupling in and coupling out of a mode of a multi-mode fiber; and
Fig. 3 illustrates an exemplary setup of a MMF amplifier.

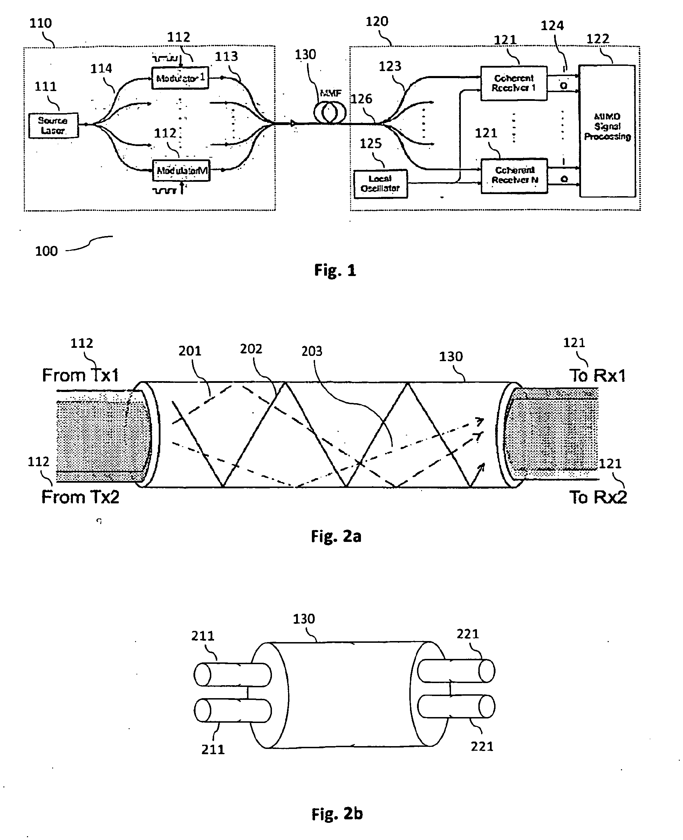

In Fig.1 an optical transmission system 100 comprising a multi-mode transmitter 110 and a multi-mode receiver 120 is illustrated. This optical transmission system 100 enables the transport of a plurality of optical signals at the same wavelength over a MMF 130. The multi-mode transmitter 110 comprises a source laser 111 which provides an optical carrier signal 114. The optical carrier signal 114 is modulated separately by a set of M modulators 112, thereby providing M differently modulated optical signals 113. These differently modulated optical signals 113 are coupled to different modes of the MMF 130.

At a respective multi-mode receiver 120, the received optical signal 126 is coupled out into N received optical signals 123. These N received optical signals 123 are detected by N coherent receivers 121 at the output of the MMF 130. The N coherent receivers 121 make use of a joint local oscillator 125. It should be noted that the number N of separately received optical signals 123 may be different from the number M of modulated optical signals 113. In an embodiment, however, M and N are equal.

The N coherent receivers 121 provide N digitized received signals 124. These digitized received signals 124 are jointly submitted to MlM0 (multiple-input multiple-output) processing 122 in order to numerically isolate the information transmitted at the multi-mode transmitter 110 within the M modulated optical signals 113. For this purpose MlM0 detection schemes, e.g. schemes which are already known from wireless or wireline transmission systems, may be used.

Fig. 2a illustrates different modes 201, 202 and 203 in the multi-mode fiber 130. Typically, light travelling in an optical fiber forms so-called hybrid-type modes which are modes with nonzero electric and magnetic fields in the direction of propagation. Commonly, groups of the exact hybrid-type modes are formed, with the modes of each group exhibiting practically the same group velocity. In a weakly guiding communication fiber the superposition of the exact modes in each group is linear polarized. These superpositions of modes are themselves treated as fiber modes and they are usually referred to as quasi LP (linear polarization) modes LPₘ,ₙᵤ, wherein m and nu are integers which denote the particular mode. The mode LP_{0,1} refers to the basic mode. Conventional MMFs 130 can carry approximately more than 50 modes. For very long fiber links, the slight velocity differences of the exact modes, i.e. the hybrid-type modes, become visible and the grouping to LP modes may become meaningless. In the context of this document the term "modes" denotes "LP modes" and/or "exact modes", depending on the fiber link length of the transmission system.

The launching or coupling in of the M modulated optical signals 113 into the MMF 130 at the multi-mode transmitter 110 and the extraction or coupling out of the N received optical signals 123 from the MMF 130 at the multi-mode receiver 120 is illustrated in Fig. 2b. The M modulated optical signals 113 may be carried by M single mode fibers 211. The SMF-MMF coupling between the M SMFs 221 and the MMF 130 may be performed by butt-coupling with different lateral offsets for the different modulated optical signals 113 at the transmitter 110. In a similar manner, the N received optical signals 123 may be coupled out of the MMF 130 at the receiver 120 by butt-coupling of N SMFs 221 with different lateral offsets for the different received optical signals 123.

The multi-mode transmission characteristics of the transmission system 100 may be described by a transfer function H which is a matrix with N rows and M columns. The transfer function specifies the transformation of the M modulated optical signals 113 into N received optical signals 123. In an ideal scenario for a high number of fiber modes, the elements of H will have a complex Gaussian distribution, with Rayleigh distribution for their amplitude and uniform distribution for their phase. Furthermore, if independent sets of modes are excited by the M SMF-MMF couplings at the multi-mode transmitter 110 and if the N received optical signals 123 are detected independently via the N MMF-SMF couplings at the multi-mode receiver 120, then the elements of H will be independent as well. If these two conditions are met, a theoretical maximum capacity of the MlM0 system may be achieved, which is N times the capacity of a single mode.

The optical transmission channels formed by the different spatial modes of the MMF 130 may change statistically due to phase drifts and due to cross-coupling between the modes which may be induced by fiber bending (e.g. micro bending). These drifting channel conditions lead to drifting inter channel interference (lcl). Nevertheless, it can be shown that this drifting ISI can be equalized by the electronic MlM0 processing 122 within the receiver 120 provided that the originating physical effects can be described by unitary matrices (except for phase and amplitude factors common for all modes) which formulate the amplitude transfer between the optical signal amplitudes transported in the different MMF modes. In this case, the receiver 120 can demultiplex all channels without significant loss, i.e. the transmission quality remains stable, even though mode mixing has occurred.

In an optimum case, the number M of transmitters is equal to the number N of receivers and the number of participating fiber modes. In this case, the transfer matrix H becomes unitary after factoring out common phase and amplitude transfer factors, and can be inverted by the MlM0 processing 122 within the receiver 120 without loss of capacity. I.e. the channels can be demultiplexed without penalty irrespective of phase distribution and mode coupling (e.g. micro bending) during the propagation along the fiber.

As outlined above, a strong deviation from the unitary condition of H should be avoided. This means that correlation between the channel elements leading to a lower rank of the transfer function H should be avoided in order to increase the throughput of the transmission system 100. Such correlation may be a result of the fact that some common guiding modes are excited by the different SMF-MMF couplings violating the unitary condition at the multi-mode transmitter 110. Therefore, the launching conditions should be controlled in order to reduce the dependency between the channel elements of the transfer function H and in order to increase the achievable bitrate, i.e. the spectral efficiency of the transmission system 100.

In typical optical networks, additional network elements or components may be inserted in the optical MMF path. Such additional elements may be optical multi-mode amplifiers which exhibit different gains for the different modes, multi-mode optical filters, add-drop multiplexers, reconfigurable add-drop multiplexers or switches, wavelength de-/multiplexers, etc., which transport different spatial modes with different loss. Such network elements may violate the above unitary condition. It should be noted that phase transfer differences between the modes typically do not impair the performance. In order to maintain a high spectral efficiency of the transmission system, the gain or loss of the LPₘ,ₙᵤ modes, which may be caused by the additional network component, should be controlled. In a preferred embodiment, the gain or loss of the LPₘ,ₙᵤ modes should be equalized for the different LPₘ,ₙᵤ modes.

In cases where the additional network element is an optical amplifier, an equalized gain or loss of the LPₘ,ₙᵤ modes could be achieved by using an amplification fiber, e.g. an erbium doped fiber amplifier, which has the same number of modes as the MMF 130 used for the transmission. Furthermore, one-to-one coupling of the MMF modes from the transmitting MMF 130 to the amplification fiber and back to the transmitting MMF 130 would have to be achieved. In addition, the amplification fiber should be able to provide a flat gain profile for all of the LPₘ,ₙᵤ modes carried in the MMF 130.

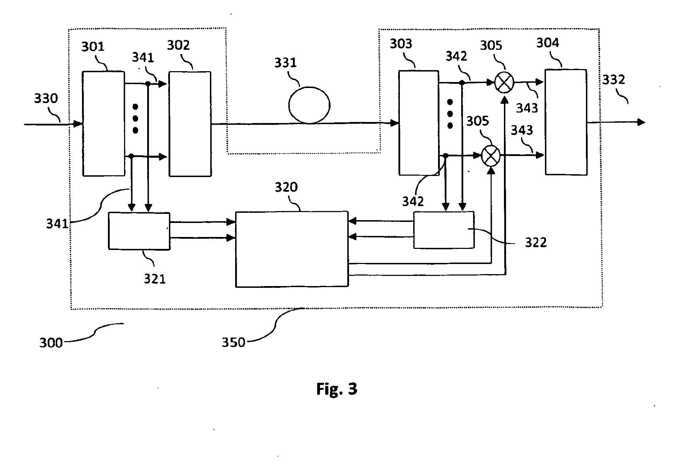

In view of the fact that the above conditions may not be achieved by an amplification fiber, a MMF optical amplifier 300 comprising a mode equalizer 350 as illustrated in Fig. 3 is suggested. The mode equalizer 350 monitors the power of the individual modes at the input and at the output of the MMF amplifier fiber 331 and controls the overall gain of each LPₘ,ₙᵤ mode. The gain of a mode may be set by adjusting variable optical attenuators (VOA) 305. For this purpose the different modes 341 of a multi-mode fiber 330 before amplification are extracted by a mode splitter 301. The power of the individual modes 341 before amplification is determined by a power measurement unit 321. The individual modes 341 may be merged in a mode combiner 302 to be fed into the MMF amplifier fiber 331, where the different modes are jointly amplified. The MMF amplifier fiber 331 may be an erbium doped fiber amplifier. After amplification, the different amplified modes 342 may be extracted by a mode splitter 303. The individual amplified modes 342 are passed to a power measurement unit 321 which determines the power of the individual modes 342 after amplification.

It should be noted that other embodiments are also possible. By way of example, the equalization may be performed by other measures, e.g. by the variable optical amplification of the different modes. Furthermore, it may be contemplated to only extract samples or fractions of the modes of the multi-mode fiber, in order to determine the power of the individual modes 341, 342. By doing this, the mode combiners 302, 304 may be omitted.

The power information on the power of the modes 341 before amplification and the power of the modes 342 after amplification is fed into a power control unit 320. The power control unit 320 determines deviations of the gain incurred by the different modes 342 and adjusts the variable optical attenuators 305. Subject to instructions received from the power control unit 320, the optical attenuators 305 may attenuate the amplified modes 342 such that the gain of the different amplified modes 342 is equalized to a common level. As such, equalized modes 343 are obtained downstream of the variable optical attenuators 305. Eventually the equalized modes 343 are merged in a mode combiner 304 and fed into a MMF 332 for transmission.

The components of the MMF optical amplifier shown in Fig. 3 may be implemented by different optical components. The mode splitter 301, 303 and the mode combiners 302, 304 may be implemented by one or more holograms, by one or more single-mode fibers, by one or more optical lenses, and/or by long-period fiber gratings (LPG). The power measurement units 321, 322 may be implemented by one or more photo diodes or other optical detection means. Variable optical attenuators 305 may e.g. be implemented by overlaying the optical signal of a particular mode with a phase shifted optical signal of the same mode. By changing the phase shift, the in-phase or the out-of-phase relationship of the overlaid signals could be lowered or increased, thereby controlling the degree of attenuation. A variable optical attenuator 305 may be implemented in a planar lightwave circuit and the degree of phase shift could be controlled e.g. by exploiting a thermooptic effect of the lightwave circuit.

In the present document, a system and method for controlling the transmission characteristics of a MMF transmission system using MlM0 techniques have been described. In particular, a method and system for equalizing the different modes of a MMF have been presented. As a result, the independence of the different transmission channels can be maintained, thereby increasing the spectral efficiency of the MMF transmission system.

It should be noted that the description and drawings merely illustrate the principles of the proposed methods and systems. It will thus be appreciated that those skilled in the art will be able to devise various arrangements that, although not explicitly described or shown herein, embody the principles of the invention. Furthermore, all examples recited herein are principally Intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, It should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A network arrangement (300) configured to equalize a first and a second mode in a multi-mode fiber (330, 331, 332), the network arrangement (300) comprising:
- a first power determination unit (321) configured to determine first power values associated with the first and the second mode (341) at a first network location;
- a second power determination unit (322) configured to determine second power values associated with the first and the second mode (342) at a second network location downstream of the first network location;
- a first equalizer (305) associated with the first mode and configured to change a power of the first mode (342) at the second network location; and
- a power control unit (320) configured to
- analyze the first and second power values determined by the first (321) and second (322) power determination unit; and
- control the first equalizer (305) subject to analyzing the first and second power values.

2. The network arrangement (300) of claim 1, wherein the power control unit (320) is configured to control the first equalizer (305) such that a ratio of the changed power of the first mode (343) at the second network location downstream of the first equalizer (305) and a power of the second mode at the second network location corresponds to a ratio of the first power values.

3. The network arrangement (300) of any previous claim, further comprising:
- a first mode extraction unit (301) configured to extract the first and the second mode from the multi-mode fiber (330) at the first network location.

4. The network arrangement (300) of any previous claim, further comprising:
- a second mode extraction unit (303) upstream of the first equalizer (305) configured to extract the first and the second mode from the multi-mode fiber (331) at the second network location; and
- a second mode insertion unit (304) downstream of the first equalizer (305) configured to insert the first mode in the multi-mode fiber (332) at the second network location.

5. The network arrangement (300) of claim 3 or 4, wherein the first mode extraction unit (301), the second mode extraction unit (303), and/or the second mode insertion unit (304) comprise at least one of:
- long-period fiber grating;
- a hologram;
- a lens; and/or
- a single-mode fiber.

6. The network arrangement (300) of any of claims 2 to 4, wherein the first mode extraction unit (301) and/or the second mode extraction unit (303) are configured to extract a mode independently from the other mode.

7. The network arrangement (300) of any of claims 4 to 6, wherein the second mode insertion unit (304) is configured to insert the first mode in the multi-mode fiber (332) independently from the second mode.

8. The network arrangement (300) of any previous claim, wherein the first equalizer comprises a variable optical attenuator.

9. The network arrangement (300) of any previous claim, further comprising
- a network component (331) at an intermediate network location downstream of the first network location and upstream of the second network location; wherein the network component (331) is configured to modify a power of the first and/or second mode.

10. The network arrangement (300) of claim 9, configured to uniformly amplify the first and the second mode in the multi-mode fiber (330, 331, 332), wherein the network component (331) comprises an amplifying multi-mode fiber (331).

11. The network arrangement (300) of claim 10, wherein the amplifying multi-mode fiber (331) is an erbium doped fiber amplifier.

12. The network arrangement (300) of claim 9, wherein the network component (331) is an optical add-drop multiplexer and/or a reconfigurable optical add-drop multiplexer and/or an optical switch.

13. An optical network (100), comprising:
- a multi-mode fiber (130) configured to transmit a first and a second mode;
- a multi-mode transmitter (110) configured to transmit data over a first and a second communication channel using the first and the second mode, respectively;
- a multi-mode receiver (120) configured to receive the data of the first and second communication channel; and
- a network arrangement (300) according to any of claims 1 to 12; wherein the network arrangement (300) is positioned downstream of the multi-mode transmitter (110) and upstream of the multi-mode receiver (120).

14. The optical network (100) of claim 13, wherein the multi-mode receiver (120) comprises
- a plurality of optical coherent receivers (121), configured to provide a plurality of digitized received signals (124); and
- a multiple-input multiple-output processing unit (122), configured to determine the data of the first and the second communication channel from the plurality of digitized received signals (124).

15. A method for equalizing a first and a second mode in a multi-mode fiber (330, 331, 332), the method comprising:
- determining first power values associated with the first and the second mode (341) at a first network location;
- determining second power values associated with the first and the second mode (342) at a second network location downstream of the first network location;
- analyzing the first and second power values; and
- changing a power of the first mode (342) at the second network location subject to the analyzing of the first and second power values, such that a ratio of the changed power of the first mode (343) at the second network location and a power of the second mode at the second network location corresponds to a ratio of the first power values.

## Patentansprüche

1. Netzwerkanordnung (300), konfiguriert für das Entzerren einer ersten und einer zweiten Mode in einer Mehrmodenfaser (330, 331, 332), wobei die Netzwerkanordnung (300) umfasst:
- Eine erste Leistungsermittlungseinheit (321), konfiguriert für das Ermitteln von mit der ersten und der zweiten Mode (341) an einer ersten Netzwerkstelle assoziierten ersten Leistungswerten;
- eine zweite Leistungsermittlungseinheit (322), konfiguriert für das Ermitteln von mit der ersten und der zweiten Mode (342) an einer zweiten Netzwerkstelle stromabwärts der ersten Netzwerkstelle assoziierten zweiten Leistungswerten;
- einen ersten Entzerrer (305), welcher mit der ersten Mode assoziiert und für das Ändern einer Leistung der ersten Mode (342) an der zweiten Netzwerkstelle konfiguriert ist; und
- eine Leistungssteuereinheit (320), konfiguriert für
- das Analysieren der von der ersten (321) und der zweiten (322) Leistungsermittlungseinheit ermittelten ersten und zweiten Leistungswerte; und
- das Steuern des ersten Entzerrers (305) in Bezug auf die Analyse der ersten und zweiten Leistungswerte.

2. Netzwerkanordnung (300) nach Anspruch 1, wobei die Leistungssteuereinheit (320) dafür konfiguriert ist, den ersten Entzerrer (305) derart zu steuern, dass ein Verhältnis der geänderten Leistung der ersten Mode (343) an der zweiten Netzwerkstelle stromabwärts des ersten Entzerrers (305) zu einer Leistung der zweiten Mode an der zweiten Netzwerkstelle einem Verhältnis der ersten Leistungswerte entspricht.

3. Netzwerkanordnung (300) nach einem beliebigen der vorstehenden Ansprüche, weiterhin umfassend:
- Eine erste Modenextraktionseinheit (301), konfiguriert für das Extrahieren der ersten und der zweiten Mode aus der Mehrmodenfaser (330) an der ersten Netzwerkstelle.

4. Netzwerkanordnung (300) nach einem beliebigen der vorstehenden Ansprüche, weiterhin umfassend:
- Eine zweite Modenextraktionseinheit (303) stromaufwärts des ersten Entzerrers (305), konfiguriert für das Extrahieren der ersten und der zweiten Mode aus der Mehrmodenfaser (331) an der zweiten Netzwerkstelle;
- eine zweite Modeneinfügungseinheit (304) stromabwärts des ersten Entzerrers (305), konfiguriert für das Einfügen der ersten Mode in die Mehrmodenfaser (332) an der zweiten Netzwerkstelle.

5. Netzwerkanordnung (300) nach Anspruch 3 oder 4, wobei die erste Modenextraktionseinheit (301), die zweite Modenextraktionseinheit (303) und/oder die zweite Modeneinfügungseinheit (304) mindestens entweder umfassen:
- Ein langperiodisches Fasergitter;
- ein Hologramm;
- eine Linse; und/oder
- eine Einmodenfaser.

6. Netzwerkanordnung (300) nach einem beliebigen der Ansprüche 2 bis 4, wobei die erste Modenextraktionseinheit (301) und/oder die zweite Modenextraktionseinheit (303) für das Extrahieren einer Mode unabhängig von der anderen Mode konfiguriert sind.

7. Netzwerkanordnung (300) nach einem beliebigen der Ansprüche 4 bis 6, wobei die zweite Modeneinfügungseinheit (304) für das Einfügen der ersten Mode in die Mehrmodenfaser (332) unabhängig von der zweiten Mode konfiguriert ist.

8. Netzwerkanordnung (300) nach einem beliebigen der vorstehenden Ansprüche, wobei der erste Entzerrer ein variables optisches Dämpfungsglied umfasst.

9. Netzwerkanordnung (300) nach einem beliebigen der vorstehenden Ansprüche, weiterhin umfassend:
- Eine Netzwerkkomponente (331) an einer Netzwerkzwischenstelle stromabwärts der ersten Netzwerkstelle und stromaufwärts der zweiten Netzwerkstelle; wobei die Netzwerkkomponente (331) für das Modifizieren einer Leistung der ersten und/oder der zweiten Mode konfiguriert ist.

10. Netzwerkanordnung (300) nach Anspruch 9, konfiguriert für die einheitliche Verstärkung der ersten und der zweiten Mode in der Mehrmodenfaser (330, 331, 332), wobei die Netzwerkkomponente (331) eine verstärkende Mehrmodenfaser (331) umfasst.

11. Netzwerkanordnung (300) nach Anspruch 10, wobei die verstärkende Mehrmodenfaser (331) ein erbiumdotierter Faserverstärkter ist.

12. Netzwerkanordnung (300) nach Anspruch 9, wobei die Netzwerkkomponente (331) ein optischer Add/Drop-Multiplexer und/oder ein rekonfigurierbarer optischer Add/Drop-Multiplexer und/oder ein optischer Schalter ist.

13. Optisches Netzwerk (100), umfassend:
- Eine Mehrmodenfaser (130), konfiguriert für das Übertragen einer ersten und einer zweiten Mode;
- einen Mehrmodensender (110), konfiguriert für das Übertragen von Daten über einen ersten und einen zweiten Kommunikationskanal unter Verwendung jeweils der ersten und der zweiten Mode;
- einen Mehrmodenempfänger (120), konfiguriert für den Empfang von Daten des ersten und des zweiten Kommunikationskanals; und
- eine Netzwerkanordnung (300) gemäß einem beliebigen der Ansprüche 1 bis 12; wobei die Netzwerkanordnung (300) stromabwärts des Mehrmodensenders (110) und stromaufwärts des Mehrmodenempfängers (120) positioniert ist.

14. Optisches Netzwerk (100) nach Anspruch 13, wobei der Mehrmodenempfänger (120) umfaßt:
- Eine Vielzahl von kohärenten optischen Empfängern (121), konfiguriert für das Bereitstellen einer Vielzahl von empfangenen digitalisierten Signalen (124); und
- eine Mehrfach-Eingangs/Mehrfach-Ausgangs-Verarbeitungseinheit (122), konfiguriert für das Ermitteln der Daten des ersten und des zweiten Kommunikationskanals aus der Vielzahl von empfangenen digitalisierten Signalen (124),

15. Verfahren zum Entzerren einer ersten und einer zweiten Mode in einer Mehrmodenfaser (330, 331, 332), wobei das Verfahren umfasst:
- Ermitteln von mit der ersten und der zweiten Mode (341) an einer ersten Netzwerkstelle assoziierten ersten Leistungswerten;
- Ermitteln von mit der ersten und der zweiten Mode (342) an einer zweiten Netzwerkstelle stromabwärts der ersten Netzwerkstelle assoziierten zweiten Leistungswerten;
- Analysieren der ersten und zweiten Leistungswerte; und
- Ändern einer Leistung der ersten Mode (342) an der zweiten Netzwerkstelle in Bezug auf die Analyse der ersten und zweiten Leistungswerte, so dass ein Verhältnis der geänderten Leistung der ersten Mode (343) an der zweiten Netzwerkstelle zu einer Leistung der zweiten Mode an der zweiten Netzwerkstelle einem Verhältnis der ersten Leistungswerte entspricht.

## Revendications

1. Dispositif de réseau (300) configuré pour égaliser un premier et un deuxième modes dans une fibre multimode (330, 331, 332), le dispositif de réseau (300) comprenant :
- une première unité de détermination de puissance (321) configurée pour déterminer des premières valeurs de puissance associées aux premier et deuxième modes (341) au niveau d'un premier emplacement de réseau ;
- une deuxième unité de détermination de puissance (322) configurée pour déterminer des deuxièmes valeurs de puissance associées aux premier et déterminer des deuxièmes valeurs de puissance associées aux premier et deuxième modes (342) au niveau d'un deuxième emplacement de réseau en aval du premier emplacement de réseau ;
- un premier égaliseur (305) associé au premier mode et configuré pour modifier une puissance du premier mode (342) au niveau du deuxième emplacement de réseau ; et
- une unité de commande de puissance (320) configurée pour
- analyser les premières et deuxièmes valeurs de puissance déterminées par la première unité de détermination de puissance (321) et la deuxième unité de détermination de puissance (322) ; et
- commander le premier égaliseur (305) soumis à l'analyse des premières et deuxièmes valeurs de puissance.

2. Dispositif de réseau (300) selon la revendication 1, dans lequel l'unité de commande de puissance (320) est configurée pour commander le premier égaliseur (305) de sorte qu'un rapport entre la puissance modifiée du premier mode (343) au niveau du deuxième emplacement de réseau en aval du premier égaliseur (305) et une puissance du deuxième mode au niveau du deuxième emplacement de réseau corresponde à un rapport des premières valeurs de puissance.

3. Dispositif de réseau (300) selon l'une quelconque des revendications précédentes, comprenant en outre
- une première unité d'extraction de mode (301) configurée pour extraire le premier et le deuxième modes de la fibre multimode (330) au niveau du premier emplacement de réseau.

4. Dispositif de réseau (300) selon l'une quelconque des revendications précédentes, comprenant en outre :
- une deuxième unité d'extraction de mode (303) en amont du premier égaliseur (305) configurée pour extraire le premier et le deuxième modes de la fibre multimode (331) au niveau du deuxième emplacement de réseau ; et
- une deuxième unité d'insertion de mode (304) en aval du premier égaliseur (305) configurée pour insérer le premier mode dans la fibre multimode (332) au niveau du deuxième emplacement de réseau.

5. Dispositif de réseau (300) selon la revendication 3 ou 4, dans lequel la première unité d'extraction de mode (301), la deuxième unité d'extraction de mode (303), et/ou la deuxième unité d'insertion de mode (304) comprend/comprennent au moins un des éléments suivants :
- un réseau de fibre à longue période ;
- un hologramme ;
- une lentille et/ou
- une fibre monomode.

6. Dispositif de réseau (300) selon l'une quelconque des revendications 2 à 4, dans lequel la première unité d'extraction de mode (301) et/ou la deuxième unité d'extraction de mode (303) est/sont configurée(s) pour extraire un mode indépendamment de l'autre mode.

7. Dispositif de réseau (300) selon l'une quelconque des revendications 4 à 6, dans lequel la deuxième unité d'insertion de mode (304) est configurée pour insérer le premier mode dans la fibre multimode (332) indépendamment du deuxième mode.

8. Dispositif de réseau (300) selon l'une quelconque des revendications précédentes, dans lequel le premier égaliseur comprend un atténuateur optique variable.

9. Dispositif de réseau (300) selon l'une quelconque des revendications précédentes, comprenant en outre
- un élément de réseau (331) au niveau d'un emplacement de réseau intermédiaire en aval du premier emplacement de réseau et en amont du deuxième emplacement de réseau ; dans lequel l'élément de réseau (331) est configuré pour modifier une puissance du premier et/ou du deuxième mode(s).

10. Dispositif de réseau (300) selon la revendication 9, configuré pour amplifier uniformément premier et deuxième modes dans la fibre multimode (330, 331, 332), dans lequel l'élément de réseau (331) comprend une fibre multimode d'amplification (331).

11. Dispositif de réseau (300) selon la revendication 10, dans lequel la fibre d'amplification (331) est un amplificateur à fibre dopée à l'erbium.

12. Dispositif de réseau (300) selon la revendication 9, dans lequel l'élément de réseau (331) est un multiplexeur optique d'insertion/extraction et/ou un multiplexeur optique d'insertion/extraction reconfigurable et/ou un commutateur optique.

13. Réseau optique (100), comprenant :
- une fibre multimode (130) configurée pour transmettre un premier et un deuxième modes ;
- un émetteur multimode (110) configuré pour transmettre des données sur un premier et un deuxième canaux de communication en utilisant le premier et le deuxième modes, respectivement ;
- un récepteur multimode (120) configuré pour recevoir les données du premier et du deuxième canaux de communication ; et
- un dispositif de réseau (300) selon l'une quelconque des revendications 1 à 12 ; le dispositif de réseau (300) étant positionné en aval de l'émetteur multimode (110) et en amont du récepteur multimode (120).

14. Réseau optique (100) selon la revendication 13, dans lequel le récepteur multimode (120) comprend
- une pluralité de récepteurs optiques cohérents (121), configurés pour fournir une pluralité de signaux numérisés reçus (124) ; et
- une unité de traitement entrée multiple-sortie multiple (122), configurée pour déterminer les données du premier et du deuxième canaux de communication à partir de la pluralité de signaux numérisés reçus (124).

15. Procédé pour égaliser un premier et un deuxième modes dans une fibre multimode (330, 331, 332), le procédé comprenant les étapes suivantes :
- déterminer des premières valeurs de puissance associées au premier et au deuxième modes (341) au niveau d'un premier emplacement de réseau ;
- déterminer des deuxièmes valeurs de puissance associées au premier et au deuxième modes (342) au niveau d'un deuxième emplacement de réseau en aval du premier emplacement de réseau ;
- analyser les premières et deuxièmes valeurs de puissance : et
- modifier une puissance du premier mode (342) au niveau du deuxième emplacement de réseau soumis à l'analyse des premières et deuxièmes valeurs de puissance, de sorte qu'un rapport entre la puissance modifiée du premier mode (343) au niveau du deuxième emplacement de réseau et une puissance du deuxième mode au niveau du deuxième emplacement de réseau corresponde à un rapport des premières valeurs de puissance.
